# EUROPÄISCHE PATENTSCHRIFT

(11) **EP 1 455 278 B1**
(45) Veröffentlichungstag und Bekanntmachung des Hinweises auf die Patenterteilung: **14.06.2006**
(21) Anmeldenummer: 04004672.4
(22) Anmeldetag: 01.03.2004
(51) Int. Cl.: G06F 12/06, H04L 12/403

(54) **Verfahren zur Identifizierung einer elektronischen Einheit**
Method for identifying an electronic device
Méthode pour l'identification d'un dispositif électronique

(30) Priorität: 04.03.2003 DE 10310250
(43) Veröffentlichungstag der Anmeldung: 08.09.2004
(73) Patentinhaber: Valeo Schalter und Sensoren GmbH, 74321 Bietigheim-Bissingen (DE)
(72) Erfinder: Hoffsommer, Klaus, 74321 Bietigheim-Bissingen (DE)
(74) Vertreter: Dreiss, Fuhlendorf, Steimle & Becker

(56) Entgegenhaltungen:
- EP-A- 0 090 399
- EP-A- 0 489 346
- EP-A- 0 806 751
- DE-A- 19 940 700
- US-A- 5 450 072

## Beschreibung

Die Erfindung betrifft ein Verfahren zur Identifizierung mindestens einer elektronischen Einheit in einem elektronischen System sowie eine elektronische Einheit und ein elektronisches System. Die Erfindung betrifft weiterhin ein Computerprogramm und ein Computerprogrammprodukt zur Durchführung des Verfahrens.

Eine eindeutige Identifizierung der elektronischen Einheiten eines elektronischen Systems ist eine Voraussetzung dafür, daß innerhalb des Systems eine Kommunikation erfolgen kann. Ein derartiges System kann beispielsweise als Bussystem (z. B. CAN, LIN) ausgebildet sein. Die elektronischen Einheiten können dementsprechend als Busteilnehmer zur Durchführung systemrelevanter Aufgaben ausgebildet sein. Eine Zentraleinheit eines solchen Systems, insbesondere eines Bussystems, wird üblicherweise als Master bezeichnet.

Bei einem bekannten Identifizierungsverfahren werden einzelne Busteilnehmer eines Bussystems über getrennte Signalleitungen angesprochen. Dies kommt beispielsweise in Parkhilfesystemen mit einem Steuergerät als Master und vier bzw. zwei mal vier Sensoren als Busteilnehmern zur Anwendung. Dabei wird die Kommunikation der Busteilnehmer über eine Erlaubnisleitung (enable oder chip select) gesteuert. Über spezielle Steckerpins wird eine Codierung vorgenommen. Die Busteilnehmer können über diese Codierung ihre Identifikation selbst bestimmen. Die Codierung wird über Widerstände, die an den Steckerpins angeschlossenen sind oder sonstige elektronische Bauteile durchgeführt. Die von Busteilnehmern selbst vorgenommene Identifizierung wird dabei über Programmierung oder fortlaufende Seriennummern realisiert. Die Kommunikation der Teilnehmer über getrennte Leitungen bzw. Signalleitungen untereinander bzw. mit einem Master ist jedoch sehr aufwendig.

In der Druckschrift DE 100 15 438 A1 wird eine Codierung durch Variation der angeschlossenen Leitungen innerhalb eines Bussystems beschrieben. Dabei wird jedem Busteilnehmer ein elektronisches Schaltungsteil zugewiesen, wobei das Schaltungsteil in unterschiedlichen Anschlußkombinationen mit den Anschlußleitungen verbindbar ist. Das Schaltungsteil erkennt die jeweilige Anschlußkombination der angeschlossenen Anschlußleitung und codiert abhängig von der erkannten Anschlußkombination den Busteilnehmer. Hierbei können Batteriespannung, Masse sowie Signal für die Funktion beliebig mit Anschlußpins verbunden werden. Letztendlich entscheidet jedoch die Anschlußkombination über die Adreßcodierung.

Die Druckschrift DE 199 40 700 A1 beschreibt ein Verfahren zur automatischen Zuweisung von Meldeadressen an Melder bei einer Gefahrenmeldeanlage. Dieses Verfahren umfasst mehrere Phasen, wobei in einer dritten Phase vorgesehen ist, dass nach einem Schließen von Schaltern, wobei jeweils ein Schalter in jeweils einem der Melder angeordnet ist, in einem vorgegebenen Wechsel konstante Ströme mit unterschiedlichem Pegel einer Leitung eingeprägt werden. Diese Leitung ist jeweils abschnittsweise durch einen dieser Melder geführt, so dass einzelne benachbarte Melder jeweils über einen Leitungsabschnitt miteinander verbunden sind.

Die Druckschrift US 5 450 072 beschreibt eine Adressierungsanordnung mit einer Versorgungsleitung, einer Adressierungsleitung, einer Informationsleitung und einer Referenzleitung. Hier ist vorgesehen, dass ein Flipflop mit der Versorgungsleitung verbunden ist. Dieses Flipflop trennt eine Zelle durch Öffnung eines Adressenschreibers von der Adressierungsleitung und von der Referenzleitung durch Öffnung eines Referenzschalters. Zur eigentlichen Adressierung sind hier die Adressierungsleitung, die Informationsleitung und die Referenzleitung jedoch nicht die Versorgungsleitung vorgesehen.

Das erfindungsgemäße Verfahren soll in einem verteilten elektronischen System eine Identifizierung einzelner Teilnehmer bzw. elektronischer Einheiten des Systems ermöglichen, wobei gegenüber bekannten Verfahren eine Einsparung von Leitungen erreicht werden soll.

Das erfindungsgemäße Verfahren zur Identifizierung mindestens einer elektronischen Einheit in einem elektronischen System sieht dazu vor, daß zur Identifizierung ein Pegel einer von der mindestens einen elektronischen Einheit an einer Leitung abgegriffenen Spannung herangezogen wird. Als Leitung dient eine Versorgungsleitung. In diesem Fall ist die zur Identifizierung verwendete Spannung eine Betriebsspannung der zu identifizierenden elektronischen Einheit.

Zur Identifizierung versucht die mindestens eine elektronische Einheit des elektronischen Systems den Pegel einer Busleitung auf den Pegel der entlang der Versorgungs leitung unterschied lich hoben ubgegriffenen Spannung zu ziehen.

Bedingt durch den elektrischen Widerstand der Leitung ist der Pegel bzw. die Höhe der abgegriffenen Spannung abhängig vom Ort des Spannungsabgriffs. Zum Abgreifen dient dabei typischerweise eine sogenannte Anschlußleitung, die die elektronische Einheit mit der Leitung verbindet. Sind mehrere elektronische Einheiten vorgesehen, greifen diese an unterschiedlichen Stellen an der Leitung Spannungen ab. Diese Spannungen sind somit unterschiedlich. Jeder Einheit ist daher ein Spannungswert zugeordnet, der eine eindeutige Identifizierung der jeweiligen Einheit erlaubt.

Das erfindungsgemäße Verfahren nutzt den Spannungsabfall auf der Leitung zur Identifizierung der an der Leitung angeschlossenen Teilnehmer aus. Im realen Einsatz werden zweckmäßigerweise für die Leitung spezielle Leitungsmaterialien verwendet, um einen auswertbaren Effekt zu erzielen. Die Leitung kann hierfür anstatt aus Kupfer aus einem Material mit etwas höherem Widerstand hergestellt sein. Alternativ oder ergänzend dazu können in der Leitung Widerstände vorgesehen sein. Um den Spannungsabfall zu erzeugen, kann in der Leitung alternativ oder ergänzend auch ein Halbleiter, bspw. eine Diode, eingebaut sein.

Bei dem erfindungsgemäßen Verfahren zur Identifizierung mindestens einer elektronischen Einheit in einem Bussystem erfolgt die Identifizierung der mindestens einen elektronischen Einheit auf Grundlage der abgegriffenen Spannung. Aufgrund dieser erfindungsgemäßen Maßnahme ist eine Identifizierung auf besonders einfache Weise durchführbar. Es ist beispielsweise nicht mehr nötig, komplizierte Abfrageroutinen auszuführen, bei denen zwischen elektronischen Einheiten des Systems beispielsweise codierte Signale ausgetauscht werden müssen.

Das erfindungsgemäße Verfahren kann z.B. in einem Ultraschall-Parkhilfesystem eingesetzt werden, bei dem einzelne Sensoren eines Bussystems an räumlich verschiedenen Orten eines Fahrzeuges angeordnet sind.

Die Erfindung kann in Bussystemen mit einer beliebigen Anzahl an Teilnehmern wie Sensoren, Aktoren, Anzeigen, elektronischen Bauteilen, elektronischen Baugruppen oder integrierten Schaltkreisen zur Anwendung kommen. In einem solchen Bussystem ist die mindestens eine elektronische Einheit über eine Busleitung mit einer Zentraleinheit verbunden. Erfindungsgemäß ist es somit möglich, Busteilnehmer eines Bussystems auf einfache sowie eindeutige Weise zu identifizieren.

Das Verfahren kann in einem Bussystem zur Initialisierung der Teilnehmer und des gesamten Systems eingesetzt werden. Der Initialisierungsvorgang kann dabei von der Zentraleinheit eingeleitet bzw. beendet werden oder durch einen festgelegten Ablauf von den Teilnehmern selbst durchgeführt werden. Aufgrund einer möglichen Ausgestaltung der Zentraleinheit als Master eines Bussystems können erfindungsgemäße Maßnahmen insbesondere unter Nutzung vorhandener Ressourcen auf besonders einfache Weise realisiert werden.

Die Identifizierung kann einmalig stattfinden und für die gesamte Lebensdauer des Systems wirksam sein. Alternativ hierzu kann die Identifizierung bei jedem Anlegen einer Versorgungsspannung oder auch in festgelegten zeitlichen Abständen während des Betriebs erfolgen.

In Ausgestaltung des erfindungsgemäßen Verfahrens wird der mindestens einen elektronischen Einheit in einem Bussystem eine Busadresse zugewiesen. Diese Busadresse korrespondiert vorzugsweise mit der Anschlußreihenfolge an der Busleitung. Sind mehrere elektronische Einheiten bzw. Teilnehmer an der Busleitung angeschlossen, erfolgt somit die Identifizierung entsprechend der Anschlußreihenfolge an dem Bus. Dabei können die Teilnehmer gleich aufgebaut sein. Bei einem Austausch der Teilnehmer bleibt dann die Identifizierung der Anschlußposition zugeordnet. Daher ist das Verfahren insbesondere für Ultraschallsensoren geeignet, bei denen die Einbauposition adressiert wird und ein Austausch der Sensoren das System nicht beeinflussen darf.

In einer bevorzugten Ausführungsform des erfindungsgemäßen Verfahrens erfolgt die Identifizierung der mindestens einen elektronischen Einheit nachdem diese den Pegel der Busleitung auf den Pegel der abgegriffenen Spannung gezogen hat.

Aufgrund des Vorliegens eines Potentialgefälles entlang der Versorgungsleitung sind entlang der Versorgungsleitung unterschiedlich hohe Spannungen abgreifbar. Zur Identifizierung versucht jede elektronische Einheit des Systems, den Pegel der Spannung auf den Wert zu ziehen, der ihr über die Versorgungsleitung zur Verfügung gestellt wird. Sind die Teilnehmer nacheinander an der Leitung bzw. Versorgungsleitung angeschlossen, kann nur die letzte elektronische Einheit des Systems den Spannungswert auf ihre Betriebsspannung ziehen, da diese den niedrigsten Spannungspegel abgreift. Dabei handelt es sich um jene elektronische Einheit, die von der Zentraleinheit, die die Spannung bereitstellt, am weitesten entfernt ist.

Bei dem Verfahren wird stets jene Einheit über die erfindungsgemäße Messung der Spannung identifiziert, die räumlich bzw. potentiell den größten Abstand zu der Zentraleinheit aufweist.

Über diese eindeutige Erkennung wird die Identifizierung und Adressierung gesteuert. Busteilnehmer, denen bereits eine Adresse zugewiesen wurde, beteiligen sich nicht mehr an der Spannungsrückmeldung über die Busleitung. Somit erhalten die Busteilnehmer nacheinander ihre Identifizierung. Wird der Vorgang von der Zentraleinheit gesteuert, so kann dieser die Anzahl der Teilnehmer bekannt sein oder der Vorgang solange durchgeführt werden, bis kein weiterer Teilnehmer auf eine neue Adresse antwortet.

Zu beachten ist, daß anstatt der Spannungsrückmeldung über die Busleitung auch irgendeine andere Leitung verwendet werden kann.

Bei dem erfindungsgemäßen Verfahren erhält die wenigstens eine elektronische Einheit die Identifizierung vorzugsweise gemäß einer Anschlußreihenfolge entlang der Versorgungsleitung innerhalb des Systems. Somit kann die räumliche Anordnung der elektronischen Einheiten bei der Identifizierung mitberücksichtigt werden. Die Anschlußreihenfolge und somit der räumliche Abstand einer elektronischen Einheit von der Zentraleinheit wird durch den elektrischen Widerstand entlang der Versorgungsleitung bestimmt. Elektronische Einheiten können dabei gleich aufgebaut sein. Bei einem Austausch der elektronischen Einheiten bleibt die Identifizierung der Anschlußposition zugeordnet.

In bevorzugter Ausgestaltung der Erfindung kann vorgesehen sein, daß die wenigstens eine elektronische Einheit während des Verfahrens den Stromverbrauch erhöht. Durch diese Maßnahme kann die erfindungsgemäße Identifizierung erleichtert und deren Eindeutigkeit gesteigert werden.

Gemäß einer Ausführungsform des erfindungsgemäßen Verfahrens kann vorgesehen sein, daß das System eine feste Anzahl von Einheiten aufweist und daß das Verfahren dieser Anzahl entsprechend häufig durchgeführt wird. Bei einer anderen Ausführungsform kann vorgesehen sein, daß das Verfahren beendet wird, sobald die Spannung des Systems nicht durch wenigstens eine Betriebsspannung beeinflußt wird. Mit diesen Varianten werden Abbruchkriterien für das Verfahren bereitgestellt. Bei der ersten Ausführungsform wird gezählt, wie oft eine Abfrage durchgeführt wurde. Gemäß der zweiten Ausführungsform wird das Verfahren beendet, sobald auf eine Abfrage nicht geantwortet wird.

Das erfindungsgemäße Verfahren kann in einem Bussystem zur Anwendung kommen. Ein derartiges Bussystem kann insbesondere innerhalb eines Kraftfahrzeuges angeordnet sein. Dabei weist das Bussystem wenigstens eine Leitung auf, über die eine Zentraleinheit mit elektronischen Einheiten verbunden ist. Über wenigsten eine derartige Leitung können auch die elektronischen Einheiten untereinander verbunden sein. Über die wenigstens eine Leitung zur Verbindung von Busteilnehmern untereinander können Informationen und/oder Steuerbefehle ausgetauscht und/oder elektrische Energie geleitet werden. Bei der Durchführung des erfindungsgemäßen Verfahrens bei einem Bussystem wird insbesondere der Umstand genutzt, daß verbindende Leitungsabschnitte zwischen einzelnen Teilnehmern einen elektronischen Widerstand aufweisen. Wird das erfindungsgemäße Verfahren von einer Zentraleinheit, insbesondere bei einem Bussystem von einem Master, durchgeführt, so wird das Verfahren von der Größe des elektronischen Widerstandes zwischen der Zentraleinheit (Master) und zu identifizierenden elektronischen Einheiten (Busteilnehmer) beeinflußt.

Ist beispielsweise vorgesehen, daß sämtliche Busteilnehmer nacheinander entlang einer Busleitung sowie einer parallel dazu verlaufenden Versorgungsleitung angeordnet und mit dem Master verbunden sind, so kann das erfindungsgemäße Verfahren zur Identifizierung, wie nachfolgend beschrieben, ablaufen. Die Zuweisung einer bestimmten Identifizierungsadresse kann dadurch erreicht werden, daß diese Adresse durch eine Nachricht vom Master oder durch den Ablauf der Initialisierung feststeht. Erfindungsgemäß wird eine Systemspannung bereitgestellt. Anschließend versucht jeder Busteilnehmer die Busleitung auf den Spannungspegel zu ziehen, auf dem die Versorgungsleitung ist, also auf den Wert der Betriebsspannung. Da jedoch der letzte Teilnehmer die kleinste Versorgungsleitung besitzt, wird nur er die Busleitung auf diesen Pegel ziehen können. Eben dieser Busteilnehmer wird dann identifiziert.

Wie vorstehend ausgeführt ist, kann zur Identifizierung das Potentialgefälle entlang der Versorgungsleitung herangezogen werden. Es kann hierzu jedoch auch eine andere beliebige Leitung verwendet werden.

Das erfindungsgemäße Verfahren zur Identifizierung kann auch für ein unterschiedliches Verhalten von gleichen Teilnehmern verwendet werden. Hierbei können einzelne Busteilnehmer als Sensoren ausgebildet sein, wobei ein Busteilnehmer beispielsweise eine Temperatur und ein anderer Busteilnehmer beispielsweise einen Luftdruck mißt. Dabei kann ein Bussystem vorhanden sein oder nicht. Das erfindungsgemäße Verfahren zur Identifizierung eignet sich sowohl für ein Bussystem auf der Basis von CAN als auch für ein Bussystem auf der Basis von LIN.

Zweckmäßigerweise ist entlang der wenigstens einen Leitung ein meßbar hoher elektrischer Widerstand vorhanden. Dadurch ist bei der Durchführung des Verfahrens zur Identifizierung auf besonders eindeutige Weise ein Spannungsabfall meßbar. Dazu kann vorgesehen sein, die Leitung, über die die Spannung gemessen wird, anstatt aus Kupfer aus einem anderen Material mit leicht höherem elektronischen Widerstand herzustellen. Alternativ hierzu kann vorgesehen sein, entlang der Leitung serielle elektronische Widerstände anzuordnen.

Anstatt die Busteilnehmer entlang einer Reihe anzubinden, kann auch eine sternenförmige Anbindung erfolgen. Dies kann beispielsweise dann von Vorteil sein, wenn eine räumliche Anordnung der Busteilnehmer eine Reihenschaltung nicht oder nur unter erheblichem Aufwand zuläßt.

Bei einer derartigen Ausgestaltung ist vorgesehen, daß Leitungswiderstände zwischen einzelnen Busteilnehmern (Sensoren) unterschiedlich groß ausgebildet sind. Durch geeignete Schaltungs- und/oder Meßverfahren können dabei Toleranzen beim Stromverbrauch der Busteilnehmer (Sensoren), die einen größeren Einfluß auf das Identifizierungsverfahren haben, überbrückt werden.

Das erfindungsgemäße elektronische System weist mindestens eine elektronische Einheit und eine Leitung auf und ist derart ausgelegt, daß eine Identifizierung der mindestens einen elektronischen Einheit unter Heranziehen eines Pegels einer von der mindestens einen elektronischen Einheit an der Leitung abgegriffenen Spannung erfolgt. Als Leitung dient eine Versorgungsleitung. In diesem Fall ist die zur Identifizierung verwendete Spannung eine Betriebsspannung der zu identifizierenden elektronischen Einheit. Zur Identifizierung die mindestens eine elektronische Einheit des elektronischen Systems ausgelegt ist, den Pegel einer Busleitung auf den Pegel der entlang der Versorgungsleitung unterschiedlich hoben abgegriffenen Spannung zu ziehen.

Sind mehrere elektronische Einheiten in einem Bussystem vorgesehen, erfolgt deren Anbindung vorzugsweise in einer Reihe. Die Anbindung kann aber auch sternenförmig sein. Dann müssen die Widerstände in den einzelnen Anschlußleitungen unterschiedlich sein. Zu beachten ist, daß dadurch die Systemauslegung etwas schwieriger wird, da Toleranzen beim Stromverbrauch der Sensoren einen größeren Einfluß auf das Identifizierungsverfahren haben.

Die elektronischen Einheiten können in einer einfachen Ausführung des Systems über nur eine einzige gemeinsame Leitung verbunden sein. Allerdings kann das erfindungsgemäße Verfahren auch bei Systemen mit mehr als einer Leitung realisiert werden. Sind die elektronischen Einheiten innerhalb des Systems jedoch nur entlang einer Leitung angeordnet, bietet sich das erfindungsgemäße Verfahren zur Identifizierung in besonders vorteilhafter Weise an. Durch die Erfassung, insbesondere Messung der Spannung des Systems ist eine eindeutige Identifizierung von elektronischen Einheiten möglich.

Das erfindungsgemäße Computerprogramm umfaßt Programmcodemittel, um alle Schritte eines erfindungsgemäßen Verfahrens durchzuführen. Es kommt auf einem Computer oder einer entsprechenden Recheneinheit, insbesondere einer Recheneinheit einer Zentraleinheit in einem erfindungsgemäßen elektronischen Systems zur Ausführung.

Das erfindungsgemäße Computerprogrammprodukt umfaßt diese Programmcodemittel, die auf einem computerlesbaren Datenträger gespeichert sind.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung dargestellt und wird im folgenden unter Bezugnahme auf die Zeichnung ausführlich beschrieben.
- Figur 1: zeigt eine einfache schematische Darstellung eines Systems, bei dem eine bevorzugte Ausführungsform des erfindungsgemäßen Verfahrens zur Anwendung kommt.
- Figur 2: zeigt eine detaillierte schematische Darstellung eines Systems, bei dem eine bevorzugte Ausführungsform des erfindungsgemäßen Verfahrens zur Anwendung kommt.
- Figur 3: zeigt in einem Flußdiagramm einen Ablauf einer bevorzugten Ausführungsform des erfindungsgemäßen Verfahrens.

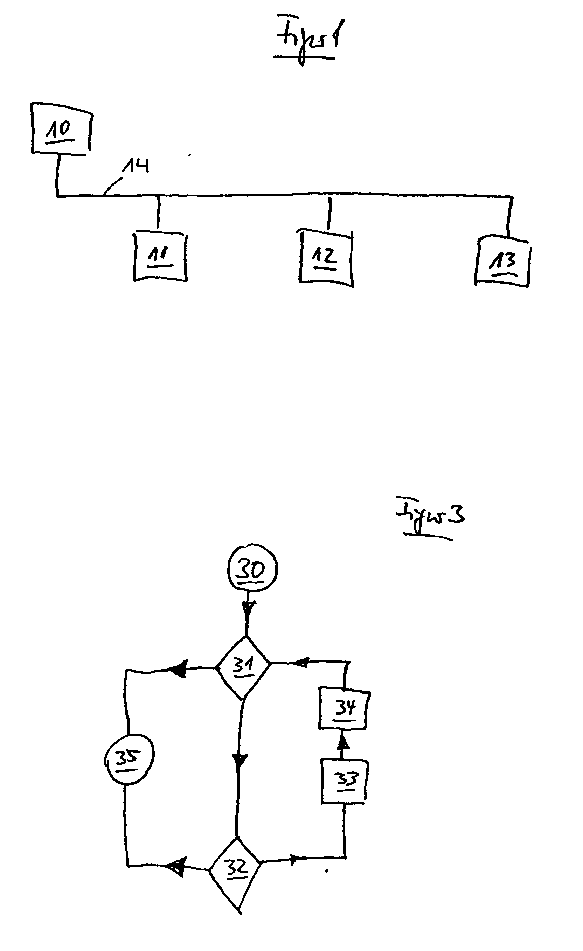

In der in Figur 1 dargestellten vereinfachten Darstellung eines Systems, insbesondere eines Bussystems, sind eine Zentraleinheit 10 (Master) sowie elektronische Einheiten 11, 12, 13 (Busteilnehmer bzw. Sensoren) über wenigstens eine Leitung 14 miteinander verbunden. Dabei sind die elektronischen Einheiten 11, 12, 13 nacheinander entlang der Leitung 14 angeordnet. Die wenigstens eine Leitung 14 kann als Versorgungsleitung, auf Batteriespannung liegend, als Masseleitung oder als Bus-Leitung ausgebildet sein. Der Stromverbrauch der elektronischen Einheiten (Busteilnehmer) 11, 12, 13 verursacht einen Spannungsabfall auf der Leitung 14, insbesondere wenn diese als Versorgungsleitung ausgebildet ist. Dieser Spannungsabfall hängt vom Stromverbrauch der elektronischen Einheiten 11, 12, 13 sowie vom Leitungswiderstand ab. Da die elektronischen Einheiten 11, 12, 13 nacheinander mit der Leitung 14 verbunden sind, ist die Spannung, insbesondere die Versorgungsspannung, an einer elektronischen Einheit 11, 12, 13 um so kleiner, je weiter sie von der Zentraleinheit 10 entfernt ist.

Bei einer Ausführungsform des erfindungsgemäßen Verfahrens bei einem System, wie in Figur 1 dargestellt, kann vorgesehen sein, daß die Zentraleinheit 10 entlang der Leitung 14, insbesondere der Versorgungsleitung, eine Batteriespannung von 12 Volt bereitstellt. Des weiteren ist z.B. vorgesehen, daß eine elektronische Einheit 11, 12, 13 jeweils 1 Ampere Strom benötigt. Der Leitungswiderstand zwischen einzelnen Teilnehmern 10, 11, 12, 13 des Systems beträgt jeweils 1 Ohm. Somit ergibt sich bei diesem Ausführungsbeispiel folgendes: An der ersten elektronischen Einheit 11 verbleiben 9 V, an der zweiten elektronischen Einheit 12 verbleiben 7 V und an der dritten elektronischen Einheit 13 verbleiben 6 V. Nun kann vorgesehen sein, daß die elektronischen Einheiten 11, 12, 13 so konstruiert sind, daß sie den Zahlenwert der Spannung als identifizierende Größe bzw. Marke verwenden. Auf diese Weise kann die Zentraleinheit 10 die erste elektronische Einheit 11 durch die Marke "9" eindeutig adressieren bzw. identifizieren.

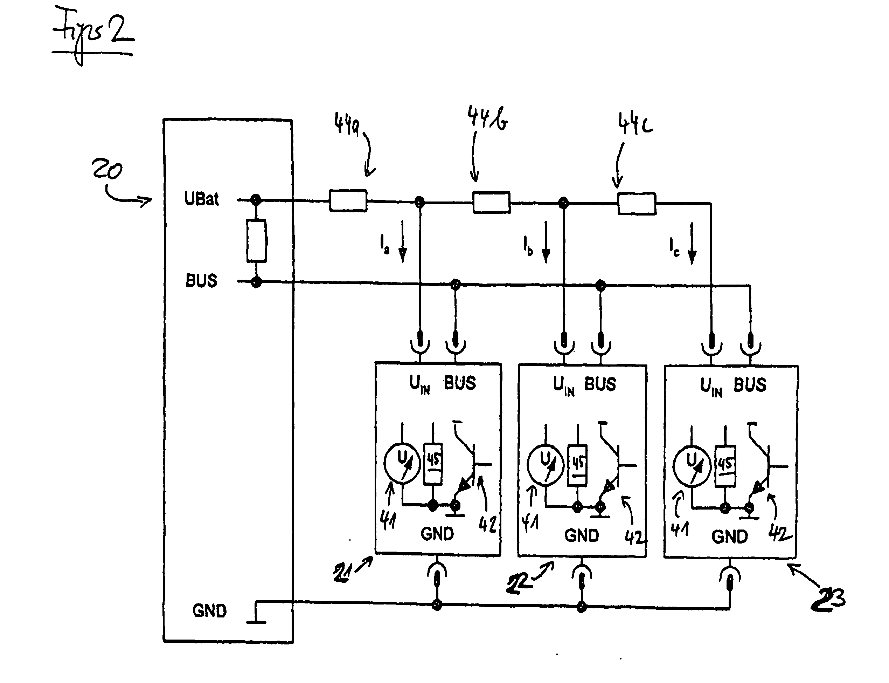

Figur 2 zeigt eine bevorzugte Ausgestaltungsform eines erfindungsgemäßen Systems, insbesondere eines Bussystems, unter Berücksichtigung weiterer Details. Das Bussystem (System) weist einen Master 20 (Zentraleinheit) sowie drei Sensoren 21, 22, 23 (Busteilnehmer, elektronische Einheiten) auf. Der Master 20 und die Sensoren 21, 22, 23 sind über drei Leitungen miteinander verbunden: einer Versorgungsleitung (U_{BAT}), einer Bus-Leitung (Bus) sowie einer Masseleitung (GND). Entlang der Versorgungsleitung U_{BAT} sind elektronische Widerstände 44a, 44b, 44c angeordnet. Die Sensoren 21, 22, 23 können identisch aufgebaut sein. Sie enthalten folgende, symbolisch dargestellte Vorrichtungen: eine Messvorrichtung 41 zur Messung einer Versorgungsspannung an U_{BAT}, einen Lastwiderstand 45, der die Versorgungsspannung belastet sowie einen Bus-Treiber 42, der die Spannung der Bus-Leitung (Bus) auf Masse (GND) oder einen beliebigen Spannungspegel (eigene Betriebsspannung) ziehen kann.

Das Bussystem ist so ausgelegt, daß der Stromverbrauch der Sensoren 21, 22, 23 durch die Lastwiderstände 45 und die Leitungswiderstände 44a, 44b, 44c zu einem Spannungsabfall von wenigen Volt am letzten Sensor 23 führt. Allerdings erlaubt der Betriebspannungsbereich der Sensoren 21, 22, 23 einen normalen Sensorbetrieb und eine normale Bus-Kommunikation für alle Sensoren 21, 22, 23.

Anhand der Figur 3 wird eine bevorzugte Ausführungsform eines Verfahrens zur Identifizierung in einem Flußdiagramm schematisch dargestellt. Dieses Verfahren kann zur Identifizierung von Sensoren 21, 22, 23 innerhalb eines Bussystems, wie in Figur 2 dargestellt, zur Anwendung kommen. Bei dem bevorzugten Ausführungsbeispiel ist der Master 20 auf einen Initialisierungsablauf zur Durchführung des Verfahrens zur Identifizierung für drei Sensoren 21, 22, 23 programmiert. Das Verfahren beginnt bei einem Schritt 30. Sämtliche Sensoren 21, 22, 23 befinden sich in einem nicht-initialisierten bzw. nicht-identifizierten Zustand. Der Master 10 legt die Sensoren 21, 22, 23 über die Versorgungsleitung U_{BAT} an eine vorgegebene Spannung, insbesondere Systemspannung. Die Betriebs- bzw. Versorgungsspannung U_{IN} der Sensoren 21, 22, 23 ist aufgrund der Widerstände in der Versorgungsleitung 44a, 44b, 44c und der Widerstände 45 der Sensoren 21, 22, 23 unterschiedlich groß. Die Versorgungsspannung für den ersten Sensor 21 ist am größten, die für den letzten Sensor 23 am kleinsten. Der Master 10 sendet ein Telegramm "Identifikationsvergabe für Adresse 01", das jeder Sensor 21, 22, 23 erkennt (Schritt 31).

In Schritt 32 versucht jeder Sensor 21, 22, 23 für ein bestimmtes Zeitintervall, beispielsweise eine Sekunde, den Spannungspegel der Bus-Leitung (Bus) auf den Pegel der Versorgungsspannung U_{IN} zu ziehen. Dabei erkennt lediglich der letzte Sensor 23, daß er den Spannungspegel der Busleitung an seine Versorgungsspannung U_{IN} angleichen kann. Der letzte Sensor 23 übernimmt daraufhin die "Adresse 01".

Der Master 20 versendet im Schritt 33 ein Telegramm "Identifikationsprüfung Adresse 01". Der letzte Sensor 23 antwortet mit einem Telegramm "Adresse 01 vorhanden". Der Master 20 erkennt, daß die Identifikation bzw. Initialisierung der "Adresse 01" erfolgreich war (Schritt 34).

Sind aufgrund einer Programmierung des Masters 20 noch weitere Sensoren 21, 22 zu initialisieren bzw. identifizieren, wird das Verfahren mit Schritt 31 fortgesetzt. Zur Identifizierung der verbliebenen Sensoren 21, 22 legt der Master 20 die Versorgungsspannung U_{BAT} auf eine Systemspannung. Zudem versendet er ein Telegramm "Identifikationsvergabe für Adresse 02", das jeder der verbliebenen Sensoren 21, 22 erkennt.

In Schritt 32 versuchen die nicht-initialisierten Sensoren 21, 22 für einen kurzen Zeitraum den Spannungspegel der Bus-Leitung auf den Spannungspegel der Versorgungsspannung U_{IN} zu ziehen. Nur der zweite Sensor 22 erkennt, daß er den Spannungspegel der Bus-Leitung an die Spannung U_{IN} (eigene Betriebsspannung) angleichen konnte. Der zweite Sensor 22 übernimmt daraufhin die "Adresse 02".

Wiederum in Schritt 33 versendet der Master 20 ein Telegramm "Identifikationsprüfung Adresse 02". Der zweite Sensor 22 antwortet mit einem Telegramm "Adresse 02 vorhanden". Der Master 20 erkennt, daß die Identifikation der "Adresse 02" erfolgreich war (Schritt 34).

Zur Identifizierung des verbliebenen ersten Sensors 21 beginnt das Verfahren mit Schritt 31 abermals von vorne.

In Schritt 31 legt der Master 20 den Sensor 21 auf den Spannungspegel der Versorgungsleitung U_{BAT}. Der Master 20 sendet ein Telegramm "Identifikationsvergabe für Adresse 03", welches der Sensor 21 erkennt. Die nicht-initialisierten Sensoren, also in diesem Fall lediglich der erste Sensor 21, versuchen daraufhin den Spannungspegel der Bus-Leitung für einen kurzen Zeitraum, typischerweise für eine Sekunde, auf den Spannungspegel der Versorgungsspannung U_{IN} zu ziehen. Der erste Sensor 21 erkennt, daß er den Spannungspegel der Bus-Leitung an den Spannungspegel der Versorgungsspannung U_{IN} (eigene Betriebsspannung) angleichen kann. Der erste Sensor 21 übernimmt daraufhin die "Adresse 03".

In Schritt 33 sendet der Master 20 ein Telegramm "Identifikationsprüfung Adresse 03". Der erste Sensor 21 antwortet mit einem Telegramm "Adresse 03 vorhanden". Der Master 20 erkennt, daß die Identifikation der "Adresse 03" erfolgreich war (Schritt 34).

Aufgrund seiner Programmierung weiß der Master 20, insbesondere aufgrund einer Zählung, daß alle drei Sensoren 21, 22, 23 initialisiert bzw. identifiziert worden sind. Das erfindungsgemäße Verfahren wird daraufhin beendet (Schritt 35). Nun kann ein Normalbetrieb des Systems beginnen.

In einer anderen Ausgestaltungsvariante des erfindungsgemä-ßen Verfahrens kann vorgesehen sein, daß ein Abbruch des Verfahrens aufgrund eines anderen Kriteriums erfolgt. Dies kann beispielsweise dann gegeben sein, wenn die Anzahl der Sensoren nicht einprogrammiert ist und/oder der Master keine Zählung einzelner Schritte 32, 33, 34 des Verfahrens zur Identifizierung der Sensoren 11, 12, 13 vornimmt. In diesem Fall kann ein Abbruch des Verfahrens innerhalb des Schrittes 32 durchgeführt werden. Falls keiner der Sensoren 11, 12, 13 auf eine Anfrage des Masters 20 reagiert, weil sie alle bereits identifiziert bzw. initialisiert sind, und der Master 20 keine Änderung der von ihm erfindungsgemäß angelegten Versorgungsspannung U_{BAT} mißt, kann das Verfahren aufgrund dessen beendet werden (Schritt 35).

Für das Verfahren zur Identifizierung kann sich als vorteilhaft erweisen, wenn jeweils einer elektronischen Einheit bzw. einem Busteilnehmer, bzw. einem Sensor eine bestimmte, festgelegte Adresse zugewiesen wird. Um dies zu erreichen, kann eine zweite Leitung, insbesondere eine Bus-Kommunikationsleitung verwendet werden. Die Leitung zur Bus-Kommunikation z.B. LIN-Bus ist üblicherweise über Pull-Up-Widerstände von ca. 10 kOhm bis 100 kOhm mit der Versorgungsspannung U_{BAT} verbunden. Der Master 20 und die Sensoren 21, 22, 23 haben die Fähigkeit diese Bus-Kommunikationsleitung auf Masse GND zu ziehen, indem ein Endstufentransistor eines Treibers vollständig durchgesteuert wird. Eine kleine Änderung im Aufbau des Treibers ermöglicht es auch, die Leitung auf beliebige Spannungspegel zu ziehen. Der Spannungspegel der Bus-Leitung kann jedoch von einem Treiber nie vergrößert werden.

## Patentansprüche

1. Verfahren zur Identifizierung mindestens einer elektronischen Einheit (11, 12, 13, 21, 22, 23) in einem elektronischen System, bei dem zur Identifizierung ein Pegel einer von der mindestens einen elektronischen Einheit (11, 12, 13, 21, 22, 23) an einer Versorgungsleitung (U_{BAT}) abgegriffenen Spannung herangezogen wird,
**dadurch gekennzeichnet,**
**daß** zur Identifizierung die mindestens eine elektronische Einheit (11, 12, 13, 21, 22, 23) des elektronischen Systems versucht, den Pegel einer Busleitung auf den Pegel der entlang der Versorgungsleitung (U_{BAT}) unterschiedlich hohen abgegriffenen Spannung zu ziehen.

2. Verfahren nach Anspruch 1, bei dem zu einem Abgreifen eine Anschlußleitung, die die mindestens eine elektronische Einheit (11, 12, 13, 21, 22, 23) mit der Versorgungsleitung (U_{BAT}) verbindet, dient.

3. Verfahren nach Anspruch 1 oder 2, bei dem die zur Identifizierung heranzuziehende Spannung eine Betriebspannung der elektronischen Einheit (11, 12, 13, 21, 22, 23) ist.

4. Verfahren nach Anspruch 1, 2 oder 3, bei dem das elektronische System ein Bussystem ist, in dem die mindestens eine elektronische Einheit (11, 12, 13, 21, 22, 23) über die Busleitung mit einer Zentraleinheit (10, 20) verbunden ist.

5. Verfahren nach Anspruch 4, das von der Zentraleinheit (10, 20) gesteuert wird.

6. Verfahren nach einem der Ansprüche 1 bis 5, das zur Initialisierung des elektronischen Systems eingesetzt wird.

7. Verfahren nach einem der Ansprüche 4 bis 6, bei dem der mindestens einen elektronischen Einheit (11, 12, 13, 21, 22, 23) eine Busadresse zugewiesen wird.

8. Verfahren nach Anspruch 7, bei dem die zugewiesene Adresse der mindestens einen elektronischen Einheit (11, 12, 13, 21, 22, 23) mit einer Anschlußreihenfolge an der Busleitung korrespondiert.

9. Verfahren nach einem der Ansprüche 4 bis 8, bei dem die Identifizierung der mindestens einen elektronischen Einheit (11, 12, 13, 21, 22, 23) erfolgt, nachdem diese den Pegel der Busleitung auf den Pegel der abgegriffenen Spannung gezogen hat.

10. Verfahren nach einem der Ansprüche 1 bis 9, bei dem das elektronische System eine Anzahl von elektronischen Einheiten (11, 12, 13, 21, 22, 23) aufweist und der Identifizierungsvorgang dieser Anzahl entsprechend häufig durchgeführt wird.

11. Elektronisches System zur Durchführung eines Verfahrens nach einem der Ansprüche 1 bis 10, mit mindestens einer elektronischen Einheit (11, 12, 13, 21, 22, 23), bei dem vorgesehen ist, daß eine Identifizierung der mindestens einen elektronischen Einheit (11, 12, 13, 21, 22, 23) unter Heranziehen eines Pegels einer von der mindestens einen elektronischen Einheit (11, 12, 13, 21, 22, 23) an einer Versorgungsleitung (U_{BAT}) abgegriffenen Spannung erfolgt,
**dadurch gekennzeichnet,**
**daß** zur Identifizierung die mindestens eine elektronische Einheit (11, 12, 13, 21, 22, 23) des elektronischen Systems ausgelegt ist, den Pegel einer Busleitung auf den Pegel der entlang der Versorgungsleitung (U_{BAT}) unterschiedlich hohen abgegriffenen Spannung zu ziehen.

12. Elektronisches System nach Anspruch 11, bei dem die mindestens eine elektronische Einheit (11, 12, 13, 21, 22, 23) so ausgebildet ist, daß diese den eigenen Stromverbrauch variieren kann.

13. Elektronisches System nach Anspruch 11 oder 12, das eine Versorgungsleitung (U_{BAT}) aufweist.

14. Elektronisches System nach einem der Ansprüche 11 bis 13, das als Bussystem ausgebildet ist, bei dem die mindestens eine elektronische Einheit (11, 12, 13, 21, 22, 23) über die Busleitung mit einer Zentraleinheit (10, 20) verbunden ist.

15. Elektronisches System nach Anspruch 14, bei dem eine Anzahl von elektronischen Einheiten (11, 12, 13, 21, 22, 23) vorgesehen ist.

16. Elektronisches System nach Anspruch 15, bei dem die elektronischen Einheiten (11, 12, 13, 21, 22, 23) in einer Reihe an der Busleitung angeschlossen sind.

17. Computerprogramm mit Programmcodemitteln, um alle Schritte des Verfahrens nach einem der Ansprüche 1 bis 10 durchzuführen, wenn das Computerprogramm auf einem Computer oder einer entsprechenden Recheneinheit, insbesondere einer Recheneinheit in einer Zentraleinheit (10, 20) in einem elektronischen System nach Anspruch 14, durchgeführt wird.

18. Computerprogramm nach Anspruch 17, das als Computerprogrammprodukt mit Programmcodemitteln, die auf einem computerlesbaren Datenträger gespeichert sind, gespeichert ist.

## Claims

1. Method for identifying at least one electronic unit (11, 12, 13, 21, 22, 23) in an electronic system, in which a level of a voltage tapped by the at least one electronic unit (11, 12, 13, 21, 22, 23) on a supply line (U_{BAT}) is used for the identification, **characterized in that**, for the identification, the at least one electronic unit (11, 12, 13, 21, 22, 23) of the electronic system attempts to draw the level of a bus line to the level of the tapped voltage having different values along the supply line (_{UBAT}).

2. Method according to Claim 1, in which a connecting line which connects the at least one electronic unit (11, 12, 13, 21, 22, 23) to the supply line (U_{BAT}) serves for a tap.

3. Method according to Claim 1 or 2, in which the voltage to be used for the identification is an operating voltage of the electronic unit (11, 12, 13, 21, 22, 23).

4. Method according to Claim 1, 2 or 3, in which the electronic system is a bus system in which the at least one electronic unit (11, 12, 13, 21, 22, 23) is connected to a central unit (10, 20) via the bus line.

5. Method according to Claim 4, which is controlled by the central unit (10, 20).

6. Method according to any of Claims 1 to 5, which is used for initializing the electronic system.

7. Method according to any of Claims 4 to 6, in which the at least one electronic unit, (11, 12, 13, 21, 22, 23) is assigned a bus address.

8. Method according to Claim 7, in which the assigned address of the at least one electronic unit (11, 12, 13, 21, 22, 23) corresponds to a connection sequence on the bus line.

9. Method according to any of Claims 4 to 8, in which the identification of the at least one electronic unit (11, 12, 13, 21, 22, 23) is effected after this has drawn the level of the bus line to the level of the tapped voltage.

10. Method according to any of Claims 1 to 9, in which the electronic system has a number of electronic units (11, 12, 13, 21, 22, 23) and the identification process is carried out with a frequency corresponding to this number.

11. Electronic system for carrying out a method according to any of Claims 1 to 10, comprising at least one electronic unit (11, 12, 13, 21, 22, 23), in which it is intended to effect an identification of the at least one electronic unit (11, 12, 13, 21, 22, 23) using a level of a voltage tapped by the at least one electronic unit (11, 12, 13, 21, 22, 23) on a supply line (U_{BAT}), **characterized in that**, for the identification, the at least one electronic unit (11, 12, 13, 21, 22, 23) of the electronic system is designed to draw the level of a bus line to the level of the tapped voltage having different values along the supply line (U_{BAT}).

12. Electronic system according to Claim 11, in which the at least one electronic unit (11, 12, 13, 21, 22, 23) is formed in such a way that it can vary its own current consumption.

13. Electronic system according to Claim 11 or 12, which has a supply line (U_{BAT}).

14. Electronic system according to any of Claims 11 to 13, which is in the form of a bus system, in which the at least one electronic unit (11, 12, 13, 21, 22, 23) is connected to a central unit (10, 20) via the bus line.

15. Electronic system according to Claim 14, in which a number of electronic units (11, 12, 13, 21, 22, 23) is provided.

16. Electronic system according to Claim 15, in which the electronic units (11, 12, 13, 21, 22, 23) are connected in series to the bus line.

17. Computer program having program code means for carrying out all steps of the method according to any of Claims 1 to 10 if the computer program is carried out on a computer or a corresponding computing unit, in particular a computing unit in a central unit (10, 20) in an electronic system according to Claim 14.

18. Computer program according to Claim 17, which is stored as a computer program product having program code means which are stored on a computer-readable data medium.

## Revendications

1. Procédé pour l'identification d'au moins une unité (11, 12, 13, 21, 22, 23) électronique dans un système électronique, dans lequel un niveau d'une tension prélevée sur une ligne d'alimentation (U_{BAT}) par la au moins une unité (11, 12, 13, 21, 22, 23) électronique est utilisé pour l'identification,
**caractérisé en ce que**
pour l'identification, la au moins une unité (11, 12, 13, 21, 22, 23) électronique du système électronique essaye d'amener le niveau d'une ligne de bus sur le niveau de la tension prélevée sur une ligne d'alimentation (U_{BAT}) et de niveau différent.

2. Procédé selon la revendication 1, dans lequel une ligne de raccordement, qui relie la au moins une unité (11, 12, 13, 21, 22, 23) électronique à la ligne d'alimentation (U_{BAT}), sert à un prélèvement.

3. Procédé selon la revendication 1 ou 2, dans lequel la tension à utiliser pour l'identification est une tension de service de l'unité (11, 12, 13, 21, 22, 23) électronique.

4. Procédé selon la revendication 1, 2 ou 3, dans lequel le système électronique est un système de bus dans lequel la au moins une unité (11, 12, 13, 21, 22, 23) électronique est reliée par la ligne de bus à une unité centrale (10, 20).

5. Procédé selon la revendication 4, qui est commandé par l'unité centrale (10, 20).

6. Procédé selon l'une quelconque des revendications 1 à 5, qui est utilisé pour l'initialisation du système électronique.

7. Procédé selon l'une quelconque des revendications 4 à 6, dans lequel une adresse de bus est attribuée à la au moins une unité (11, 12, 13, 21, 22, 23) électronique.

8. Procédé selon la revendication 7, dans lequel l'adresse attribuée de la au moins une unité (11, 12, 13, 21, 22, 23) électronique correspond avec un ordre de succession de raccordement sur la ligne de bus.

9. Procédé selon l'une quelconque des revendications 4 à 8, dans lequel l'identification de la au moins une unité (11, 12, 13, 21, 22, 23) électronique intervient une fois que cette unité a amené le niveau de la ligne de bus au niveau de la tension prélevée.

10. Procédé selon l'une quelconque des revendications 1 à 9, dans lequel le système électronique présente un certain nombre d'unités (11, 12, 13, 21, 22, 23) électroniques et l'opération d'identification de ce nombre est effectuée avec une fréquence appropriée.

11. Système électronique pour la mise en oeuvre d'un procédé selon l'une quelconque des revendications 1 à 10, comprenant au moins une unité électronique (11, 12, 13, 21, 22, 23), sur lequel il est prévu qu'une identification de la au moins une unité (11, 12, 13, 21, 22, 23) électronique s'effectue en utilisant un niveau d'une tension prélevée sur la ligne d'alimentation (U_{BAT}) par la au moins une unité (11, 12, 13, 21, 22, 23) électronique,
**caractérisé en ce que**,
pour l'identification, la au moins une unité (11, 12, 13, 21, 22, 23) électronique du système électronique est conçue pour amener le niveau d'une ligne de bus au niveau de la tension différente et prélevée le long de la ligne d' alimentation (U_{BAT}).

12. Système électronique selon la revendication 11, sur lequel la au moins une unité (11, 12, 13, 21, 22, 23) électronique est conçue de telle sorte que celle-ci puisse modifier la consommation de courant propre.

13. Système électronique selon la revendication 11 ou 12, qui présente une ligne d'alimentation (U_{BAT}).

14. Système électronique selon l'une quelconque des revendications 11 à 13, qui est conçu comme un système de bus, sur lequel la au moins une unité (11, 12, 13, 21, 22, 23) électronique est reliée par la ligne de bus à une unité centrale (10, 20).

15. Système électronique selon la revendication 14, sur lequel un certain nombre d'unités (11, 12, 13, 21, 22, 23) électroniques est prévu.

16. Système électronique selon la revendication 15, sur lequel les unités (11, 12, 13, 21, 22, 23) électroniques sont raccordées dans une rangée à la ligne de bus.

17. Programme informatique avec des moyens de code de programme pour effectuer toutes les étapes du procédé selon l'une quelconque des revendications 1 à 10, lorsque le programme informatique est effectué sur un ordinateur ou une unité de calcul appropriée, en particulier une unité de calcul dans une unité centrale (10, 20) dans un système électronique selon la revendication 14.

18. Programme informatique selon la revendication 17, qui est mémorisé comme produit de programme informatique avec des moyens de codage de programme qui sont stockés sur un support de données pouvant être lu par l'ordinateur.
